(19) Europäisches Patentamt
European Patent Office
Office européen des brevets

(11) Veröffentlichungsnummer: **0 269 102 B1**

(12) # EUROPÄISCHE PATENTSCHRIFT

(45) Veröffentlichungstag der Patentschrift: **06.03.91**

(51) Int. Cl.⁵: **C09D 5/44**

(21) Anmeldenummer: **87117466.0**

(22) Anmeldetag: **26.11.87**

(54) **Durch Protonierung mit Säure wasserverdünnbare Bindemittel.**

(30) Priorität: **28.11.86 DE 3640804**

(43) Veröffentlichungstag der Anmeldung:
**01.06.88 Patentblatt 88/22**

(45) Bekanntmachung des Hinweises auf die Patenterteilung:
**06.03.91 Patentblatt 91/10**

(84) Benannte Vertragsstaaten:
**AT BE CH DE ES FR GB IT LI NL SE**

(56) Entgegenhaltungen:
**EP-A- 0 165 558**
**US-A- 3 723 262**

(73) Patentinhaber: **BASF Lacke + Farben Aktiengesellschaft**
**Max-Winkelmann-Strasse 80**
**W-4400 Münster(DE)**

(72) Erfinder: **Schwerzel, Thomas, Dr.**
**Budapester Strasse 51**
**W-6700 Ludwigshafen(DE)**
Erfinder: **Osterloh, Rolf, Dr.**
**Am Kappelbusch 2**
**W-5042 Erftstadt(DE)**
Erfinder: **Schupp, Eberhard, Dr.**
**Theodor-Storm-Strasse 29**
**W-6718 Gruenstadt(DE)**
Erfinder: **Perner, Thomas, Dr.**
**Berner Weg 24**
**W-6700 Ludwigshafen(DE)**
Erfinder: **Ahlers, Klaas, Dr.**
**Foehrenweg 21**
**W-4400 Muenster(DE)**

(74) Vertreter: **Welzel, Gunther, Dr. et al**
**c/o BASF Aktiengesellschaft Carl-Bosch-Strasse 38**
**W-6700 Ludwigshafen(DE)**

EP 0 269 102 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft durch Protonierung mit Säure wasserverdünnbare und in Gegenwart von Säuren thermisch vernetzbare Bindemittel für die kathodische Elektrotauchlackierung, enthaltend in kovalenter Bindung die Gruppen

$-SO_2-OR$ (Ia) oder

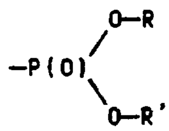 (Ib) oder 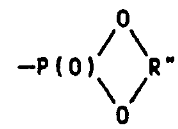 (Ic)

in denen R eine $C_2$-$C_{18}$-Alkyl-, eine Cycloalkyl- oder Aralkylgruppe bedeutet, welche einen oder mehrere elektronegative Substituenten trägt und wobei R′ für einen der Reste R oder eine $C_1$-$C_{18}$-Alkyl-, eine Cycloalkyl-oder Aralkylgruppe und R″ für eine $C_2$-$C_4$-Alkylengruppe steht.

Bindemittelsysteme für die kathodische Elektrotauchlackierung, die einer säurekatalysierten Härtungsreaktion zugänglich sind, insbesondere solche, die mit Amino- und Phenoplasten als Härtungsmittel kombiniert sind, haben bischer nicht die Anwendungsbreite gefunden, die aufgrung der großen Zahl preisgünstig vorhandener Amino- und Phenoplastharze zu erwarten wäre.

Ein wesentlicher Grund dafür ist die Schwierigkeit, im basischen Milieu des abgeschiedenen Bindemittels eine ausreichend wirksame Härtung, inbesondere säurekatalysierte Härtung zu bewirken.

Die Verwendung von p-Toluolsulfonsäure als Härtungsbeschleuniger hat den Nachteil, daß sie nur partiell mit dem Überzugsmittel auf das Substrat gelangt, sich im Elektrotauchbad anreichert und zu Störungen bei der Lackierung führt.

In der DE-OS 34 22 509 werden Bindemittel beschrieben, die Sulfonat- und/oder Phosphonatgruppen bzw. die Ester dieser Gruppierung eingebaut enthalten. Auf Seite 7, Zeile 28 bis 31 wird ausgeführt, daß die Sulfonsäure- und Phosphonsäureestergruppierungen bei der Überführung des Bindemittels in die wäßrige Phase praktisch vollständig zu den Sulfonat- und Phosphonatgruppen hydrolysiert werden, jedoch erwiesen sich Bindemittel mit Sulfonsäureestern und Phosphonsäureestern im Gegensatz zu den Ausführungen der DE-OS 34 22 509 als hydrolysestabil und zeigten nur sehr geringe katalytische Wirkung.

Es zeigte sich weiterhin, daß die katalytisch wirksamen Sulfonsäure-und Phosphonsäuregruppen die Lagerstabilität der Dispersionen durch vorzeitige langsame Vernetzungsreaktion negativ beeinflussen.

Der vorliegenden Erfindung lag daher die Aufgabe zugrunde, lagerstabile Bindemitteldispersionen für die katalytische Elektrotauchlackierung bereitzustellen, die bei der Verwendung von Amino- und Phenoplasten als Vernetzer thermisch härtbar sind.

Demgemäß wurden durch Protonierung mit Säure wasserverdünnbare und in Gegenwart von sauer katalysierbaren Vernetzern thermisch vernetzbare Bindemittel für die kathodische Elektrotauchlackierung gefunden, enthaltend in kovalenter Bindung die Gruppen

$-SO_2-OR$ (Ia) oder

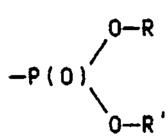 (Ib) oder 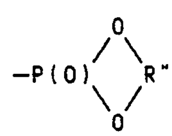 (Ic)

in denen R eine $C_2$-$C_{18}$-Alkyl-, eine Cycloalkyl- oder Aralkylgryuppe bedeutet, welche einen oder mehrere elektronegative Substituenten trägt und wobei R′ für einen der Reste R oder eine $C_1$-$C_{18}$-Alkyl-, eine Cycloalkyl-oder Aralkylgruppe und R″ für eine $C_2$-$C_4$-Alkylengruppe steht.

Gegenstand der Erfindung ist weiterhin ein Verfahren zur Herstellung der Sulfonsäure- und/oder Phosphonsäureester enthaltenden Bindemittel durch Addition von primäre und/oder sekundäre Aminogruppen enthaltenden Bindemitteln an Vinylsulfon- bzw. Vinylphoshonsäureesterverbindungen. Gegenstand der vorliegenden Erfindung ist außerdem die Verwendung dieser Überzugsmittel für die kathodische Elektrotauchlackierung von elektrisch leitenden Substraten.

Geeignete Reste R für die Sulfonsäure- und Phosphonsäureester-Gruppen (Ia) und (Ib) weisen bevorzugt in 2-Stellung zur Estergruppe einen elektronegativen Substituenten auf, und sind z.B. 2-Hydroxyethyl, 2-Hydroxpropyl, 2-Hydroxybutyl, 2-Phenoxyethyl, 2-Chlorethyl und 2-Bromethyl

Geeignete Reste R′ sind R oder z.B. Ethyl, Propyl, Butyl, Pentyl, Hexyl. Beispiele für R″ der cyclischen Phosphonsäureester sind Ethylen, Propylen-1,2 und Butylen-2,3.

Durch Protonierung mit Säure wasserverdünnbare Bindemittel im Sinne der Erfindung sind Polymere mit primären, sekundären, tertiären und quaternären Stickstoffatomen, wobei Produkte mit primären und/oder sekundären Stickstoffatomen bevorzugt sind

Aus der Literatur sind viele Synthesemöglichkeiten mit verschiedenen Rohstoffen bekannt geworden, um basische Stickstoffgruppierungen aufweisende Makromoleküle aufzubauen. Im folgenden werden verschiedene Synthesemöglichkeiten angeführt, wobei es sich jedoch im wesentlichen nur um eine beispielhafte Aufzählung handeln soll.

Die wichtigste Gruppe von Ausgangsmaterialien zur Herstellung von Polymeren mit basischen Stickstoffatomen sind Epoxidgruppen tragende Verbindungen, die mit Aminen umgestzt werden, Die bekanntesten epoxidgruppenhaltigen Rohstoffe, deren gemeinsame Kennzeichen des Vorhandensein eines Oxiranringes ist, sind die Glycidylether von Phenolen, insbesondere von 2,2′-Bis-4-(hydroxyphenyl)propan. Ebenso sind die Glycidylether von Phenol-Formaldehydkondensaten des Novolak-Typs, Glycidylester von aliphatischen, aromatischen oder cycloaliphatischen Mono- bzw. Polycarbonsäuren, Glycidylether von aliphatischen oder cycloaliphatischen Diolen bzw. Polyolen, Copolymerisate des (Meth)acrylsäureglycidylesters oder Epoxidierungsprodukte von aliphatischen bzw. cycloaliphatischen Olefinen zu nennen. Eine ausführliche Beschreibung dieser Stoffklasse findet sich bei H.M. Paquin, Epoxidverbindungen und Epoxidharze, Verlag Springer 1958.

Zur Addition an Oxiranringe geeignete Amine sind z.B. primäre und sekundäre Amine, sowie deren höhere Homologe bzw. Isomere, wie z.B. Dimethylamin, Diethylamin usw. Besonders geeignet sind primäre und sekundäre Alkanolamine wie z.B. Dialjanolamin und Diisopropanolamine, außerdem Aminoalkylalkanolamine. Weiter erwähnt seien cyclische Amine wie Ethylenimin, Morpholin und Piperidin. Zu den Verbindungen, die zu polymeren Epoxid/Amin-Addukten führen, gehören beispielsweise auch Ammoniak (vgl. DE-OS 29 14 297, DE-OS 30 08 810) und insbesondere Diamine, wie z.B. Ethylendiamin, Propan-1,3-diamin, Hexamethylendiamin, 4,9-Dioxadodekan-1,12-diamin sowie Diethylentriamin (vgl. DE-OS 27 37 375).

Andere Diamine, die zur Umsetzung geeignet sind, sind primär-tertiäre oder sekundär-sekundäre Diamine (vgl. DE-OS 28 05 936). Werden Amine, insbesondere die Amine mit primären Aminogruppen, im Überschuß eingesetzt, wobei die oxirangruppenhaltige Verbindung zudosiert und das überschüssige Amin anschließend abdestilliert wird, so kommt es zur Bildung von Epoxidharzderivaten mit primären und/oder sekundären Aminogruppen.

Sofern die resultierenden Epoxidharzderivate NH-Gruppen aufweisen, können sie im Anschluß an die Einführung der basischen Gruppen noch mit Monound/oder Dicarbonsäuren bzw. ihren Estern, mit Polyacrylaten oder auch Mono- und/oder Di-Epoxidverbindungen umgesetzt werden.

Eine andere Gruppe von Makromolekülen mit basischen Stickstoffatomen wird durch Copolymerisation von geeigneten basischen Monomeren mit Hydroxyalkyl-(meth)-acrylaten, vorzugsweise in Anwesenheit weiterer copolymerisierbarer Verbindungen hergestellt. Derartige basische Monomere gehören z.B. zur Gruppe der (Meth)acrylsäureester bzw. Amide, wie N,N-Dimethylaminoethyl(meth)acrylat und Dialkylaminoalkyl(meth)acrylamid mit 1 bis 10 Kohlenstoffatomen in den Alkylgruppen. Andere geeignete Monomere mit basischen Stickstoffatomen sind z.B. Vinylpyridin, N-Vinylimidazol und N-Vinylcarbazol. Auch diese Verbindungen liegen als Copolymerisat mit Hydroxyalkyl(meth)acrylaten und bevorzugt mit weiteren (Meth)acrylsäureestern, (Meth)acrylsäureamiden, Vinylaromaten wie Styrol, Vinyltoluol, α-Methylstyrol oder Gemischen dieser Monomeren vor.

Eine weitere Gruppe von Makromollekülen mit primären und sekundären Stickstoffatomen sind die Umsetzungsprodukte von Diaminen, z.B. Hexamethylendiamin mit Epoxidharzen und Dicarbonsäuren bzw. Polyacrylaten, wie sie z.B. der DE-OS 34 22 472 und der DE-OS 34 22 473 zu entnehmen sind.

Andere geeignete Makromoleküle mit basischen Stickstoffatomen sind substituierte Oxazolidine, die z.B. durch cyclisierende Kondensation von Aminoalkoholen, wie Tris-hydroxymethlaminomethan oder 2-Amino-2-hydroxymethyl-1,3-propandiol mit aliphatischen Carbonsäuren oder carboxylgruppenhaltigen Makromolekülen erhalten werden (vgl. z.B. DE-OS 22 49 378). Eine zusammenfassende Darstellung dieser Stoffklasse findet sich in Chemical Reviews, 1971, Vol. 71, Nr. 5, Seiten 483 bis 505.

Eine weitere Gruppe von Makromolekülen mit basischen Stickstoffatomen liefert die Reaktion von anhydridgruppenhaltigen Substanzen mit Alkanolaminen mit tertiären Stickstoffatomen bzw. die Reaktion von Säureanhydridgruppen oder deren Halbestern mit Diaminen, die ein primäres und ein tertiäres Stickstoffatom enthalten (vgl. z.B. DE-OS 28 05 936).

Die Einführung der Sulfonat- oder Phosphonatgruppen in basische Bindemittel, kann auf verschiedene Weise erfolgen, sie hängt von Aufbau und der Zusammensetzung der Bindemittel ab.

Eine Möglichkeit der Einführung von Sulfonsäureester und Phosphonsäureester besteht in der direkten Addition von Estern der Vinylphosphonsäure oder Vinylsulfonsäure mit den oben beschriebenen RestenR, R' und R" an Polymere mit NH-Gruppierungen z.B. an Epoxid/Diamin-Addukte, wie sie bereits genannt wurden, nach Art einer Michael-Addition.

Die Menge an basischer Komponente wird vorteilhafterweise so gewählt, daß die Basizität des Bindemittels nach Neutralisation durch Säuren z.B. Essigsäure eine ausreichende Wasserverdünnbarkeit bei pH-Werten von 5 bis 9, vorzugsweise 6,8 bis 8,5 ergibt. Im allgemeinen haben die Bindemittel eine Aminzahl von bis 20 bis 150, bevorzugt 30 bis 140 mg KOH/g.

Zur Vernetzung der basischen Bindemittel werden, wenn diese nicht schon selbst in ausreichendem Maße über säurekatalysierbare Vernetzungsgruppierungen verfügen, entsprechende säurekatalysierbare Vernetzungsmittel zugesetzt.

Solche Vernetzungsmittel sind bevorzugt Amino- und Phenoplaste. Geeignete Aminoplaste sind z.B. die Reaktionsprodukte von Harnstoffen oder Melaminen mit Aldehyden, die mit einem Alkohol verethert sein können. Spezielle Beispiele für geeignete Aminoplastharzausgangskomponenten sind Harnstoff, Ethylenharnstoff, Thioharnstoff, Melamin, Benzoguanamin, Acetoguanamin und 2-Oxo-4-hydroxy-hexahydropyrimidin. Spezielle Beispiele für zur Herstellung geeigneter Aminoplastharze verwendbare Aldehyde sind Formaldehyd, Acetaldehyd und Propionaldehyd, vorzugsweise Formaldehyd. Die Aminoplastharze können in der Alkylolform eingesetzt werden; vorzugsweise werden diese Harze jedoch in Form ihrer Ether verwendet, wobei das Veretherungsmittel ein einwertiger Alkohol mit 1 bis 10, vorzugsweise 1 bis 4 Kohlenstoffatomen ist. Beispiele für geeignete Aminoplastharze sind Methylolharnstoff, Dimethoxymethylharnstoff, mit Butanol veretherte Harnstoff-Formaldehyd-Harze, Hexamethoxymethylmelamin, mit Methanol veretherte Melamin-Formaldehyd-Harze und mit Butanol veretherte Melamin-Formaldehyd-Harze. Besonders gut geeignet sind z.B. niedrigmethylolierte hochveretherte Produkttypen. Aminoplastharze und Methoden zu deren Herstellung sind beispielsweise in "Encyclopedia of Polymer Science and Technology", Band 2 (1965), Seiten 1 bis 91, Interscience Publishers, beschrieben.

Phenoplastharze sind die Reaktionsprodukte von Phenolen mit Aldehyden, welche reaktive Methylolgruppen aufweisen. Spezielle Beispiele für zur Herstellung der Phenoplastharze verwendbare Phenole sind Phenol, o-, m- oder p-Kresol, 2,4-Xylenol, 3,4-Xylenol, 2,5-Xylenol, Cardanol und p-tert.-Butylphenol, Bisphenole, wie Bisphenol A und Novolake. Für diese Reaktion einsetzbare Aldehyde sind Formaldehyd, Acetaldehyd und Propionaldehyd, vorzugsweise Formaldehyd. Besonders gut brauchbare Phenoplastharze sind Polymethylolphenole, bei denen die Hydroxylgruppe mit einem Alkylrest (z.B. einer Methyl- oder Ethylgruppe) verethert ist. Bevorzugt zu verwenden sind Produkte, die Alkylethergruppen aufweisen bzw. solche Produkte, deren Methylolgruppen mindestens partiell mit $C_1$- bis $C_{10}$-Alkoholen verethert worden sind. Phenoplastharze und ihre Herstellungsmethoden sind beispielsweise in "Encyclopedia of Polymer Science and Technology", Band 10 (1969), Seiten 1 bis 68, Interscience Publishers, beschrieben.

Der für das erfindungsgemäße Bindemittel zu verwendende Anteil an Amino- und/oder Phenoplastharz kann bis zu 45 Gew.% des Gesamtfeststoffgewichtes des Überzugsmittels betragen.

Gegebenenfalls können auch die Vernetzungsmittel Sulfonsäureester bzw. Phosphonsäureester enthalten. Beispielsweise können Verbindungen, die neben Sulfonsäure- und Phosphonsäureestern noch andere reaktionsfähige zur Cokondensation geeignete Gruppierungen enthalten (basische oder amidische NH-Gruppen) bei der Herstellung von Phenoplasten mitverwendet oder nachträglich eingebaut werden.

Die Herstellung der für die kathodische Elektrotauchlackierung verwendeten Überzugsmittel erfolgt entweder durch Mischen der Bindemittel mit den Vernetzungsmitteln bei Temperaturen, bei welchen eine einwandfreie Homogenisierung gewährleistet ist, oder durch eine partielle Reaktion zwischen den Bindemitteln und den Vernetzungsmitteln bei Temperaturen bis 150° C, vorzugsweise 70 bis 120° C. Die Mischung bzw. Umsetzung erfolgt vorteilhafterweise in Lösungsmitteln, wie Alkoholen, Glykolethern, Ketonen oder deren Gemischen.

Um die Überzugsmittel wasserverdünnbar zu machen, werden die basischen Stickstoffatome der erfindungsgemäßen Bindemittel partiell oder vollständig mit organischen und/oder anorganischen Säuren, z.B. Ameisensäure, Essigsäure, Milchsäure oder Phosphorsäure neutralisiert. Der Neutralisationsgrad hängt im Einzelfall vom jeweiligin Bindemittel ab. Im allgemeinen wird so viel Säure zugegeben, daß das Überzugsmittel in der Verarbeitungsform bei einem pH-Wert von 5 bis 9, vorzugsweise 6,8 bis 8,5 mit Wasser verdünnt werden kann.

Die Konzentration des Bindemittels in Wasser liegt im allgemeinen im Bereich von 5 bis 25 Gew.%, vorzugsweise bei 10 bis 20 Gew.%. Die zur Verarbeitung gelangende Zubereitung des Überzugsmittels kann neben dem Bindemittel und den gegebenenfalls eingesetzten Vernetzungskomponenten auch weitere

basische Stickstoffgruppen enthaltende Bindemittel sowie übliche Zusatozstoffe, Wie Pigmente, Farbstoffe, Füllstoffe, Lösungsmittel, Antioxydantien und/oder sonstige Lackhilfsmittel enthalten.

Die Überzugsmittel eignen sich insbesondere für die kathodische Elektrotauchlackierung von Metallteilen.

Bei der Abscheidung wird ein das erfindungsgemäße Bindemittel enthaltende wäßrige Bad des Überzugsmittels in Kontakt mit einer elektrisch leitenden Anode und einer elektrisch leitenden Kathode gebracht, wobei die Oberfläche der Kathode mit dem Überzugsmittel beschichtet wird. Man kann verschiedene elektrisch leitende Substrate beschichten, insbesondere metallische Substrate, wie Stahl, Aluminium, Kupfer und dergleichen, jedoch auch metallisierte Kunstoffe oder andere mit einem leitfähigen Überzug versehene Stoffe, insbesondere sog. phosphatierte Stahlbleche.

Nach der Abscheidung wird der Überzug gegebenenfalls mit Wasser gespült und bei erhöhter Temperatur gehärtet. Zum Härten werden Temperaturen von 110 bis 200 °C, vorzugsweiser 130 bis 190 °C verwendet. Die Härtungszeit beträgt 5 bis 30 Minuten, vorzugsweise 10 bis 25 Minuten. Die resultierenden Beschichtungen weisen ausgezeichnete Eigenschaften auf. Überraschenderweise lassen sich besonders in Kombination mit Melaminharzen als Vernetzungsmittel mit den erfindungsgemäßen Bindemitteln hellfarbige Beschichtungen erhalten. Die Anwesenheit von eingebauten Sulfonat- bzw. Phosphonatgruppen wirkt sich überraschenderweise auf die Korrosionsdaten nicht negativ aus.

A) Herstellung eines Vinylphosphonsäureesters

54,2 g Vinylphosphonsäure in 81 g Aceton wurden auf -30 °C gekühlt. Bei dieser Temperatur wurden 216,3 g n-Butylenoxid-1,2 in 30 Minuten zugetropft. Danach ließ man langsam auf Raumtemperatur aufwärmen. Das Lösemittel wurde anschließend am Rotationsverdampfer bei 40 °C Außentemperatur abdestilliert. Die Ausbeute betrug 160 g (99 %).

B) Herstellung eines Bindemittels

400 g Hexamethylendiamin wurden auf 80 °C erwärmt. Anschließend wurde eine 80 gew.%ige Lösung von 400 g eines handelsüblichen Epoxidharzes auf Basis von 2,2-Bis-(4-hydroxyphenyl)-propan mit einem Epoxidäquivalentgewicht von 500 in Toluol zugefügt. Nach Abklingen der anfänglich exothermen Reaktion ließ man 30 Minuten bei 100 °C ausreagieren. Dann wurde überschüssiges Hexamethylendiamin und Toluol im Vakuum abdestilliert, wobei eine Innentemperatur von 180 °C erreicht wurde. Anschließend wurden in einem Dünnschichtverdampfer bei 0,5 mbar und 180 °C die verbliebenen Spuren von freiem Amin abgezogen. Das Epoxid-Aminaddukt wies eine Aminzahl von 169 mg KOH/g und einen Erweichungspunkt von 95 °C auf.

200 g des Epoxid-Aminadduktes, 30 g Dimerfettsäure (dimerisierte $C_{10}$-$C_{24}$-Fettsäure) und 20 g Xylol wurden allmählich unter Auskreisen von Wasser auf 190 °C erhitzt und eine Stunde bei dieser Temperatur gehalten. Nach dem Abkühlen auf 130 °C wurde zunächst mit 9 g Butylglykol und danach mit 70 g Isobutanol verdünnt. Das Produkt hatte einen Feststoffgehalt von 70 Gew.%.

C) Herstellung einer Pigmentpaste

2142 g des unter B beschriebenen Bindemittels wurden mit 680 g Butylglykol, 2400 g Wasser und 70 g Eisessig verdünnt. Dann setzte man 3500 g Titandioxid, 100 g basisches Bleisilicat und 100 g Ruß hinzu.

Auf einer Kugelmühle wurde bis zu einer Korngröße von <9µm gemahlen. Anschließend stellte man mit Wasser einen Feststoffgehalt von 50 Gew.% ein.

Beispiele

810 g des unter B beschriebenen Bindemittels wurden mit der in der Tabelle aufgeführten Menge des unter A) beschriebenen Vinylphosphonsäureesters 2 Stunden bei 40 °C gerührt.

| Beispiel | Vinylphoshonsäureester | |
|---|---|---|
| 1 | 0 g | 0 mol |
| 2 | 20 g | 0,05 mol |
| 3 | 40 g | 0,10 mol |
| 4 | 80 g | 0,21 mol |
| 5 | 120 g | 0,31 mol |

Vergleichsbeispiel

810 g des unter B beschriebenen Bindemittels wurden mit 61 g Vinylphosphonsäurediethylester (0,37 mol) 2 Stunden bei 40° C gerührt.

Die Bindemittel wurden mit 324 g eines methylolierten, partiell mit Butanol veretherten Melaminharzes (FG = 70 Gew.%) vermischt. Man gab 16,2 g Eisessig hinzu und dispergierte in 1186 g Wasser.

Zu 2160 g dieser Dispersion gab man 749 g der Pigmentpaste (C), rührte innig und füllte mit Wasser auf 5000 g auf. Die Bäder wurden 120 Stunden bei 28° C gerührt. An kathodisch geschalteten, zinkphosphatierten Prüftafeln aus Stahl wurden Lackfilme innerhalb 120 Sekunden bei der angegebenen Spannung abgeschieden und 20 Minuten bei 160° C, 140° C und 130° C eingebrannt.

| Beispiel | Abscheide-spannung [V] | Bad-pH-Wert | Umgriff nach Ford [cm] | Erichsen-1) Tiefung | 70 Stunden1)2) SSK |
|---|---|---|---|---|---|
| 1 | 330 | 7,60 | 22,0 | 9,4 | - 3) |
| 2 | 370 | 7,40 | 24,5 | 8,1 | 0,1 |
| 3 | 310 | 7,59 | 20,3 | 9,2 | 0,5 |
| 4 | 280 | 7,26 | 19,0 | 8,0 | 0,4 |
| 5 | 330 | 7,40 | 19,0 | 6,7 | 0,5 |
| Vergleichs-beispiel | 350 | 7,3 | 20,0 | 8,7 | - 3) |

1) Einbrenntemperatur 160°C

2) 720 Stunden SSK: Unterwanderung am Ritz nach 720 Stunden Salzsprühnebelbelastung (nach DIN 50021)

3) nicht bestimmt, da nicht ausreichend acetonfest

Die Acetonfestigkeit wurden durch 50faches Hin- und Herreiben eines mit Aceton getränkten Wattebausches auf dem Lack bestimmt.

Vernetzung = Benotung 1-5, wobei 5 = sehr gut und 1 = mangelhaft ist.

| Beispiel | Vernetzung (Note) bei Einbrenntemperatur 130°C | 140°C | 160°C |
|---|---|---|---|
| 1 | - | - | 2 |
| 2 | 1 | 2 | 4 |
| 3 | 1 | 3 | 5 |
| 4 | 1 | 4 | 5 |
| 5 | 2 | 5 | 5 |
| Vergleichs-beispiel | 1 | 1 | 3 |

## Ansprüche

1. Durch Protonierung mit Säure wasserverdünnbare und in Gegenwart von sauer katalysierbaren Vernetzern thermisch vernetzbare Bindemittel für die kathodische Elektrotauchlackierung, enthaltend in kovalenter Bindung die Gruppen

$-SO_2-OR$ (Ia) oder

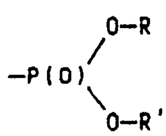 (Ib) oder 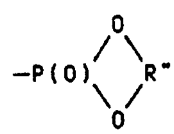 (Ic) .

in denen R eine $C_2$-$C_{18}$-Alkyl, eine Cycloalkyl- oder Aralkylgruppe bedeutet, welche einen oder mehrere elektronegative Substituenten trägt und wobei R′ für einen der Reste R oder eine $C_1$-$C_{18}$-Alkyl-, eine Cycloalkyl- oder Aralkylgruppe und R″ für eine $C_2$-$C_4$-Alkylengruppe steht.

2. Bindemittel nach Anspruch 1, in denen die Gruppen R und R′ eine 2-Hydroxyalkyl-, 2-Alkoxyalkyl- oder 2-Halogenalkylgruppe bedeuten.

3. Bindemittel nach einem der Ansprüche 1 oder 2, in denen der über die Gruppen (Ia) bzw. (Ib) und (Ic) gebundene Anteil an Schwefel bzw. Phosphor 0,02 bis 2,5 Gew.% beträgt.

4. Bindemittel nach einem der Ansprüche 1 bis 3, erhältlich durch Michael-Addition von primären und/oder sekundären Aminogruppen enthaltenden Epoxidharzen an Vinylsulfonsäureester Ia′ bzw. Vinylphosphonsäureester Ib′ und Ic′

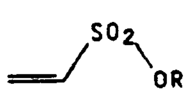 (Ia′)

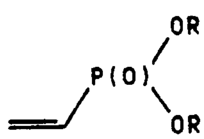 (Ib′)

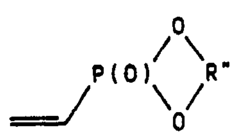 (Ic′)

5. Bindemittel nach Anspruch 1, erhältlich durch Copolymerisation von tertiären Aminogruppen aufweisenden olefinisch ungesättigten Comonomeren mit Vinylsulfonsäureestern (Ia'), Vinylphosphonsäureestern (Ib') und/oder (Ic').

6. Verfahren zur Herstellung der Bindemittel gemäß Anspruch 4, dadurch gekennzeichnet, daß man primäre und/oder sekundäre Aminogruppen enthaltende Epoxidharze an Vinylsulfonsäureester (Ia'), Vinylphosphonsäureester (Ib') und/oder (Ic') addiert.

7. Mit einem Überzug versehener Gegenstand, erhältlich durch Aufbringen eines Bindemittels gemäß Anspruch 1 in Form einer wäßrigen Dispersion, die Vernetzer und gegebenenfalls Pigmente, organische Lösungsmittel und/oder weitere Hilfsstoffe enthält, auf diesen Gegenstand und anschließendes Einbrennen des Bindemittels.

## Claims

1. A binder which is water-dilutable by protonation with an acid and thermally crosslinkable in the presence of an acid-catalyzable crosslinker, for cathodic electrocoating, containing in covalent bonding the groups

$-SO_2-OR$ (Ia) or

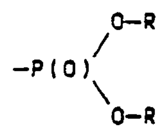 (Ib) or 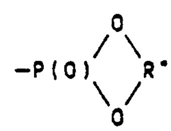 (Ic) .

where R is a $C_2$-$C_{18}$-alkyl, cycloalkyl or aralkyl group which carries one or more electronegative substituents, R' is R, $C_1$-$C_{18}$-alkyl, cycloalkyl or aralkyl, and R" is $C_2$-$C_4$-alkylene.

2. A binder as claimed in claim 1, where the groups R and R' are each 2-hydroxyalkyl, 2-alkoxyalkyl or 2-haloalkyl.

3. A binder as claimed in claim 1, where the amount of sulfur or phosphorus bonded via the groups (Ia), (Ib) and/or (Ic) is from 0.02 to 2.5% by weight.

4. A binder as claimed in claim 1, obtainable by Michael addition of an epoxy resin containing primary and/or secondary amino groups onto a vinylsulfonic ester Ia' or vinylphosphonic ester Ib' or Ic'

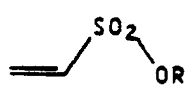 (Ia')

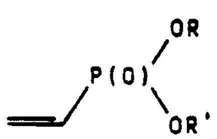 (Ib')

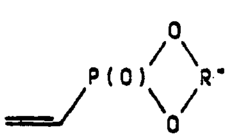 (Ic')

5. A binder as claimed in claim 1, obtainable by copolymerization of an olefinically unsaturated comonomer having tertiary amino groups with a vinylsulfonic ester (Ia') or a vinylphosphonic ester (Ib') and/or (Ic').

6. A process for preparing a binder as claimed in claim 4, which comprises adding an epoxy resin

containing primary and/or secondary amino groups onto a vinylsulfonic acid ester (Ia') or a vinylphosphonic acid ester (Ib') and/or (Ic').

7. A surface-coated article obtainable by applying a binder as claimed in claim 1 in the form of an aqueous dispersion which contains a crosslinker and if desired a pigment, an organic solvent and/or further auxiliaries to this article and subsequently baking the binder.

## Revendications

1. Liants diluables à l'eau par protonation avec un acide et réticulables. thermiquement en présence de réticulants susceptibles de catalyse acide pour le trempage électrophorétique cathodique, contenant en liaison covalente les groupements

$-SO_2-OR$ (Ia) ou

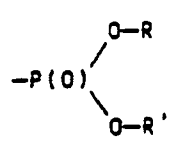 (Ib) ou 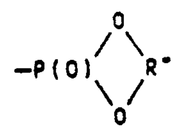 (Ic)

dans lesquels R représente un groupement alkyle en $C_2$-$C_{18}$, cycloalkyle ou aralkyle qui porte un ou plusieurs substituants électronégatifs, R' étant mis pour l'un des restes R ou un groupement alKyle en $C_1$-$C_{18}$, cycloalkyle ou aralkyle et R" pour un groupement alkylène en $C_2$-$C_4$.

2. Liants selon la revendication 1, dans lesquels les groupements R et R' représentent un groupement 2-hydroxyalkyle, 2-alcoxyalkyle ou 2-halogénalkyle.

3. Liants selon la revendication 1, dans lesquels la part de soufre ou de phosphore fixée au moyen des groupements (Ia), (Ib) et/ou (Ic) est de 0,02 à 2,5% en poids.

4. Liants selon la revendication 1, pouvant être obtenus par addition de Michael de résines époxy contenant des groupements amino primaires et/ou secondaires à des esters d'acide vinylsulfonique Ia' ou à des esters d'acide vinylphosphonique Ib' et Ic'

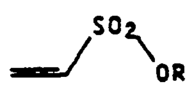 (Ia')

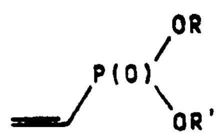 (Ib')

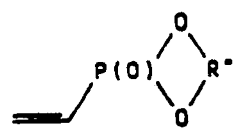 (Ic')

5. Liants selon la revendication 1, pouvant être obtenus par copolymérisation de comonomères oléfiniquement insaturés renfermant des groupements amino tertiaires avec des esters d'acide vinylsulfonique (Ia') ou avec des esters d'acide vinylphosphonique (Ib') et/ou (Ic').

6. Procédé de préparation des liants selon la revendication 4, caractérise en ce qu'on fixe par voie d'addition des résines époxy contenant des groupements amino primaires et/ou secondaires à des esters d'acide vinylsulzonique (Ia') ou à des esters d'acide vinylphosphonique (Ib') et/ou (Ic').

7. Objet garni d'une couche de revêtement, pouvant être obtenu par application, sur cet objet, d'un liant selon la revendication 1 sous forme d'une dispersion aqueuse qui contient des réticulants et éventuellement des pigments, des solvants organiques et/ou d'autres adjuvants, suivie de cuisson du liant.